**Europäisches Patentamt**

**European Patent Office**

**Office européen des brevets**

(19)

(11) Veröffentlichungsnummer: **0 059 267**

**B1**

(12)

# EUROPÄISCHE PATENTSCHRIFT

(45) Veröffentlichungstag der Patentschrift:
04.11.87

(51) Int. Cl.⁴: **F 16 D 3/78**

(21) Anmeldenummer: 81110584.0

(22) Anmeldetag: 18.12.81

(54) Elastische Kupplungselemente.

(30) Priorität: 03.03.81 DE 3108007

(43) Veröffentlichungstag der Anmeldung:
08.09.82 Patentblatt 82/36

(45) Bekanntmachung des Hinweises auf die Patenterteilung:
04.11.87 Patentblatt 87/45

(84) Benannte Vertragsstaaten:
AT FR GB IT SE

(56) Entgegenhaltungen:
DE-A-2 048 152
GB-A-11 167
US-A-1 504 626
US-A-3 062 025
US-A-3 229 480

(73) Patentinhaber: **Messerschmitt- Bölkow- Blohm Gesellschaft mit beschränkter Haftung, Robert- Koch- Strasse, D-8012 Ottobrunn (DE)**

(72) Erfinder: **Brunsch, Klaus, Dipl.- Ing., Asternweg 11, D-8190 Weidach (DE)**
Erfinder: **Herkert, Claus- Michael, Dipl.- Ing., Herzog- Albrecht- Strasse 67, D-8011 Zorneding (DE)**
Erfinder: **Thomamüller, Dieter, Ing. grad., Blumenstrasse 11, D-8206 Bruckmühl (DE)**

## Beschreibung

Die Erfindung bezieht sich auf eine elastische Axial- und Winkelversatz zulassende Wellenkupplung entsprechend den Oberbegriffen der Patentansprüche 1 und 3 und auf ein Verfahren zur Herstellung der Teile für die elastische Wellenkupplung.

Aus der US-A3 062 025 ist bereits eine elastische Wellenkupplung bekannt, bei der die Kupplungselemente mit aus Kunststoff gegossenen, die Breite der Elemente einnehmenden Schraubenaugen und zwischen diesen angeordneten dünnen Schichten aus faserverstärktem Kunststoff versehen sind, wobei zwischen letzteren als Luftschlitze ausgebildete Freiräume vorhanden sind. Da auch die dünnen Schichten, die einen Zusatz von Glasfasern aufweisen, gegossen sind, dürften diese bekannten Kupplungselemente nicht für hohe Beanspruchungen und wegen der unregelmäßigen Faseranordnung in den dünnen Schichten auch nur für geringe Steifigkeit gegen Achsversatz geeignet sein. Über die Herstellung der Luftschlitze ist aus der Schrift nichts zu entnehmen.

Die Aufgabe der Erfindung besteht darin, eine elastische Wellenkupplung der eingangs genannten Art mit möglichst großer Festigkeit, Steifigkeit und Elastizität gegen Achsversatz auszustatten und darüberhinaus ein Verfahren zur Herstellung dieser Wellenkupplung aufzuzeigen.

Diese Aufgabe wird gemäß den Merkmalen der kennzeichnenden Teile der Ansprüche 1 oder 3 bzw. 4 gelöst.

Die wesentlichen Vorteile der erfindungsgemäßen Wellenkupplung bestehen darin, daß durch die unterschiedliche Faserorientierung in den Schichten der Kupplungselemente und durch ihren einheitlichen Aufbau die Kupplungteile eine große Festigkeit, Steifigkeit und Elastizität gegen Achsversatz erhalten. Weiterhin ist von Vorteil, daß die Schraubenaugen keine gesonderten Bauteile sind, sondern in den Aufbau der zusammengepreßten und ausgehärteten Schichten, die die Kupplungselemente bilden, mit einbezogen sind und daß die für die Kupplungselemente verwendeten Werkstoffe nicht korrosionsanfällig sind.

Die Bauart nach dem Anspruch 1 und dessen im Anspruch 2 gekennzeichneten Weiterbildung, bei der nicht nur das Kupplungselement sondern auch die Flanschteile und die zu verbindenden Wellen, die zusammen im Wickelverfahren hergestellt werden, aus faserverstärktem Kunststoff bestehen, ist wegen ihres einheitlichen Aufbaus für hohe Beanspruchungen geeignet. Bei der Bauart nach Anspruch 3 sind die Flanschteile mit den Wellen und das dazwischen angeordnete elastische Kupplungselement gesonderte Bauteile. Diese Anordnung hat den Vorteil, daß das erfindungsgemäße Kupplungselement bei bereits vorhandenen Wellenkupplungen im Austausch gegen herkömmliche korrosionsanfällige Kupplungsteile aus z. B. Metallamellen verwendet werden können.

Ein Verfahren zur Herstellung der Teile für die elastische Wellenkupplung ist nach Weiterbildung der Erfindung durch den Anspruch 4 gegeben. Die einzelnen Verfahrensschritte zeigen insbesondere den einfachen Aufbau der Kupplungselemente aus die Schichten bildenden Lagen von vorimprägniertem faserverstärkten Kunststoff und aus flachen Metallteilen, die bei der Fertigung an die Stelle der späteren Luftschlitze zwischen die Schichten eingelegt und nach dem Aushärten wieder entfernt werden. Durch den erfindungsgemäßen Aufbau und die einfache Herstellung der Kupplungselemente ist es möglich, Mellenkupplungen jeder Größe und für unterschiedliche Beanspruchungen zu fertigen.

Die Erfindung wird nachfolgend anhand von in der Zeichnung dargestellten Ausführungsbeispielen beschrieben.

Es zeigen:

Fig. 1 eine Kupplung mit festen Kupplungsflanschen, die durch ein elastisches faserverstärktes Kupplungselement miteinander verbunden sind;

Fig. 2 den Aufbau einer Schicht des Kupplungselementes entsprechend Fig. 1, dargestellt als Schnitt II-II durch die Fig. 4;

Fig. 3 und 4 die Draufsicht und Seitenansicht auf ein fertiges Kupplungselement mit den Schichten entsprechend Fig. 2;

Fig. 5 und 6 die Draufsicht und Seitenansicht einer vollständig aus faserverstärktem Kunststoff bestehenden Kupplung mit einer weiteren Ausführungsfrom von Kupplungselementen;

Fig. 7 einen Halbschnitt durch eine Kupplungsseite der Fig. 5 und 6 in Explosionsdarstellung entsprechend den Linien VII-VII der Fig. 5;

Fig. 8 eine vollständige Schicht des Kupplungselementes entsprechend der Fig. 5 und 6 und

Fig. 9 bis 11 die einzelnen Teile einer zusammengesetzten Schicht des Kupplungselementes entsprechend der Fig. 5 und 6.

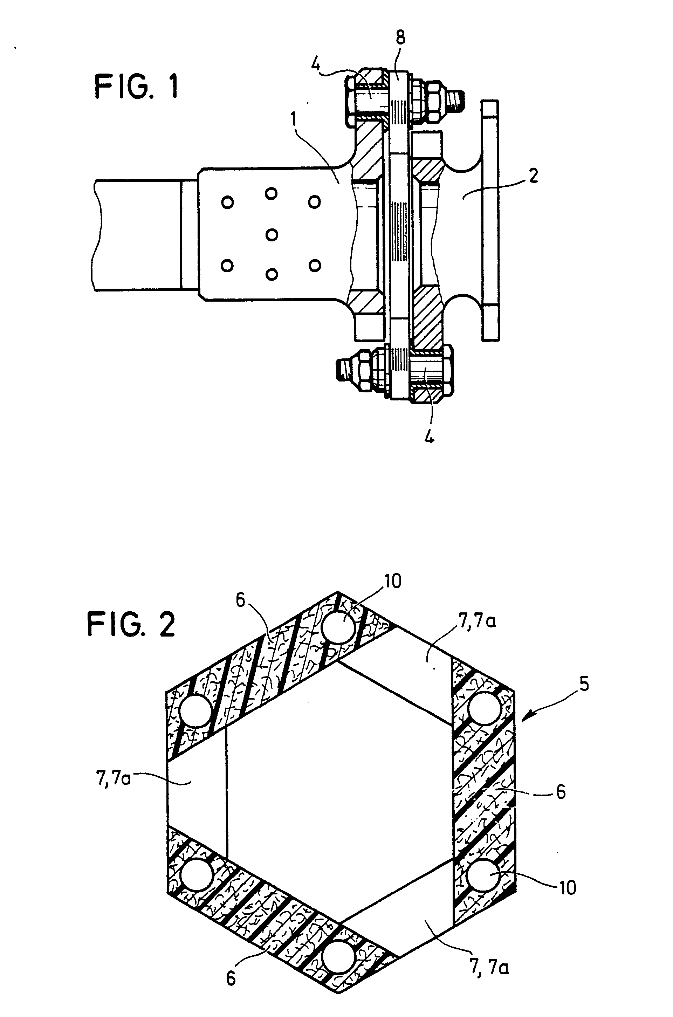

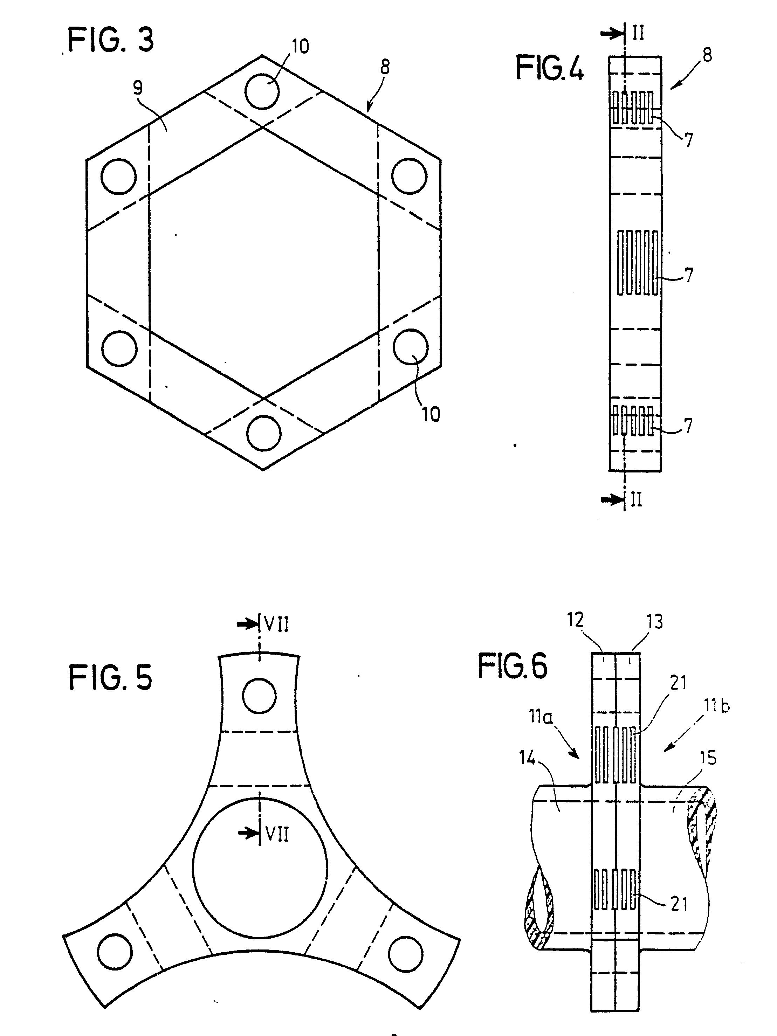

In der Fig. 1 ist eine übliche Kupplungsanordnung dargestellt, bei der ein Wellenflansch 1 und ein Kupplungsflansch 2 über ein faserverstärktes elastisches Kupplungselement 8 mittels Schrauben 4 verbunden sind. Das Kupplungselement 8 besteht aus inneren Schichten 5 und äußeren Schichten 9, die in den Fig. 2 und 3 dargestellt sind.

Die innere Schicht 5 besteht aus trapezförmigen Teilen 6 und Luftschlitzen 7. Die Teile 6 sind aus vorimprägnierten Lagen aus faserverstärktem Kunststoff, sog. Prepregs, z. B. durch Stanzen ausgeschnitten und um 120° zueinander versetzt. Die Fertigung eines vollsändigen in den Fig. 3 und 4 dargestellten Kupplungselementes 8 erfolgt in nachfolgender Weise. Auf eine äußere Schicht 9, wie sie in der

2

Seitenansicht der Fig. 3 dargestellt ist, werden mehrere innere Schichten 5 aufgebracht, die aus den Prepregteilen 6 ufd Metallteilen 7a, welche die Abmessungen der Luftschlitze aufweisen, entsprechend der in der Fig.2 dargestellten Anordnung, bestehen. Bei der nächsten inneren Schicht 5 werden die Prepregteile 6 und Metalitelle 7a um 60° versetzt zu der Anordnung in der Fig. 2 aufgelegt. Als letzte Schicht wird wiederum eine äußere Schicht 9 aufgebracht. Die Prepregteile 6 werden in der Weise aus den Lagen ausgeschnitten, daß ihre Faserorientierung in den Schichten 5 und in den im Kupplungselement 8 nebeneinander liegenden Schichten abwechselnd ± 45° und 0/90° beträgt. Das Kupplungselement 8 aus den Schichten 5 und 9 wird unter Druck und Wärme ausgehärtet. Danach werden die Metallteile 7a entfernt. Die dargestellten Löcher 10 können entweder gleich beim Zuschneiden der Prepregteile 6 mitausgestanzt oder nachträglich nach Fertigstellung des ausgehärteten Kupplungselementes 8 ausgebohrt werden.

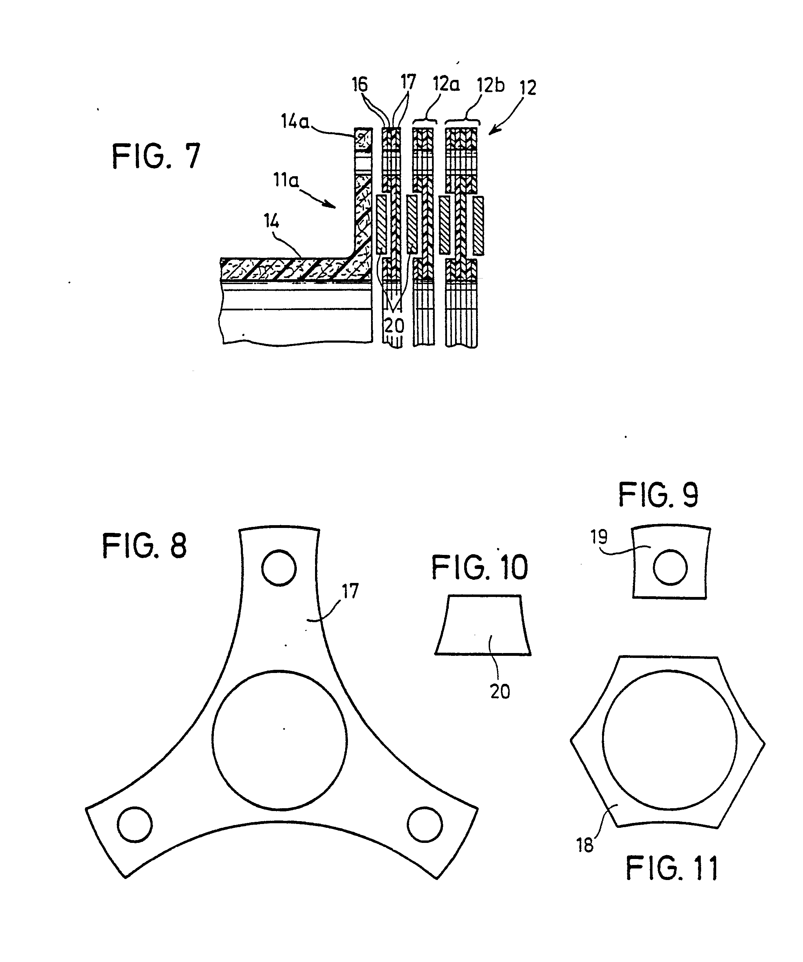

Die Fig. 5 und 6 zeigen in Seitenansicht und Draufsicht eine andere Ausführungsform von Bauteilen 11a und 11b. Diese bestehen aus Kupplungselementen 12 und 13, die mit zu verbindenden Wellen 14 und 15 eine Einheit bilden, wobei letztere auch aus faserverstärktem Kunststoff hergestellt sind. In den Fig. 7 bis 11 ist in Explosionsdarstellung der Aufbau und die Fertigung des Bauteils 11a mit dem Kupplungselement 12 und der Welle 14 gezeigt. Die Welle 14 ist zusammen mit einem Flanschteil 14a, z. B. im bekannten Wickelverfahren, aus faserverstärktem Kunststoff hergestellt. Das zugehörige Kupplungselement 12 besteht aus Schichten 16 und 17. Die Schichten 18 sind aus Prepregteilen 18 (ein Mittelteil) und 19 (drei äußere Teile) zusammengesetzt, während die Schichten 17 aus einem einzigen Prepregteil bestehen. Je mindestens zwei Schichten 18 und 17 sind zu einem Schicht-Paket 12a oder 12b zusammengesetzt, wobei 12b ein Endpaket darstellt. In die nach dem Auflegen der Teile 18 und 19 zwischen den Schichten 16 verbleibenden Zwischenräume werden Metallteile 20 eingelegt. Beim Schichtpaket 12b werden, wie die Fig.7 zeigt, zwei Metallteile 20 verwendet. Nach dem Aufeinanderlegen der Welle 14 und aller Schichten 16 und 17 des Kupplungselementes 12 werden diese zusammen mit den Metallteilen 20 verpreßt und ausgehärtet. Nach dem Aushärten werden die Metallteile 20 entfernt, wodurch wiederum Luftschlitze 21 entstehen. Diese Ausführungsform vermindert noch weiter das Gewicht der Kupplungselemente und es kann durch die Anzahl der Schichtpakete 12 jeder Anforderung an Festigkeit nachgekommen werden.

**Patentansprüche**

1. Elastische Axial- und Winkelversatz zulassende Wellenkupplung mit zwei zueinander axial gegenüberliegenden Flanschteilen und mit mindestens einem aus faserverstärktem Kunststoff bestehenden, aus radial angeordneten durchgehenden Schichten (17) und Schichten (16) mit Luftschlitzen (21) aufgebauten Kupplungselement (12, 13), die zusammen durch am Umfang angeordneten Schrauben (4) miteinander verbunden sind, dadurch gekennzeichnet, daß die Flanschteile aus faserverstärktem Kunststoff bestehen und zwei Kupplungselemententeile (12, 13) vorhanden sind, die jede aus Schichtpaketen (12a, 12b) von mindestens zwei Schichten (16, 17) zusammengesetzt sind, von denen die eine Schicht (16) ein Mittelteil (18) und drei durch Zwischenräume (Luftschlitze 21) von dem Mittelteil (18) getrennte äußere Teile (19) aufweist und die andere Schicht (17) aus einem einzigen Teil besteht, daß die Faserorientierung in jeder Schicht (16, 17) in zwei zueinander senkrechten Richtungen verläuft, wobei die Faserrichtungen in den axial nebeneinander liegenden Schichten jeweils um 45° verdreht sind, und daß die Flanschteile mit den Schichtpaketen (12a, 13a) zusammengepreßt und ausgehärtet sind.

2. Elastische Wellenkupplung nach Anspruch 1, dadurch gekennzeichnet, daß die zu verbindenden Wellen (14, 15) aus faserverstärktem Kunststoff bestehen und zusammen mit den Flanschteilen im Wickelverfahren hergestellt sind.

3. Elastische Axial- und Winkelversatz zulassende Wellenkupplung mit zwei zueinander axial gegenüberliegenden Flanschteilen (1, 2) und mit mindestens einem aus faserverstärktem Kunststoff bestehenden, aus radial angeordneten durchgehenden Schichten (9) und Schichten (5) mit Luftschlitzen (7) aufgebauten Kupplungselement (8), die zusammen durch am Umfang angeordneten Schrauben (4) miteinander verbunden sind, dadurch gekennzeichnet, daß zwei starre Flanschteile (1, 2) mit einem einen sechseckigen Polygonring bildenden elastischen Kupplungselement (8) verbunden sind, daß das Kupplungselement (8) aus mehreren inneren Schichten (5) aus um 120° versetzten trapezförmigen Teilen (6) mit dazwischenliegenden Luftschlitzen (7) und aus zwei, einen vollständigen sechseckigen Polygonring bildenden äußeren Schichten (9) aufgebaut ist, wobei die trapezförmigen Teile (6) in den jeweils axial nebeneinander liegenden Schichten (5) um 60° zueinander versetzt sind, die Faserorientierung in jeder Schicht (5, 9) in zwei zueinander senkrechten Richtungen verläuft und die Faserrichtungen in den axial nebeneinander liegenden Schichten (5, 9) um 45° verdreht sind, und daß die zum Kupplungselement (8) gehörenden Schichten (5, 9) zusammengepreßt und ausgehärtet sind.

4. Verfahren zur Herstellung der elastischen Wellenkupplung nach den Ansprüchen 1 und 2, dadurch gekennzeichnet, daß

a) die die Schichten (16, 17) und Schichtpakete (12a, 12b) bildenden Teile (17, 18, 19) aus vorimprägnierten Lagen aus faserverstärktem Kunststoff (Prepregteile) und Metallteile (20) entsprechend den Zwischenräumen (Luftschlitze 21) zwischen den Teilen (18, 19) der Schicht (16) ausgestanst werden,

b) die einzelnen Schichten (16, 17) mit den Metallteilen (20) und die Flanschteile mit den Wellen (14, 15) entsprechend dem Aufbau der Kupplungsteile (11a, 11b) zusammengelegt werden,

c) die Schichten (16, 17) und Flanschteile zusammengepret und ausgehärtet werden,

d) nach dem Aushärten die Metallteile (20) zum Entstehen der Luftschlitze (21) herausgezogen werden.

5. Verfahren zur Herstellung des Kupplungselementes (8) der elastischen Wellenkupplung nach Anspruch 3, dadurch gekennzeichnet, daß

a) die die Schichten (5, 9) bildenden Teile (6, 9) aus vorimprägnierten Lagen aus faserverstärktem Kunststoff (Prepregteile) und Metallteile (7a) entsprechend den Luftschlitzen (7) zwischen den Teilen (6) der Schicht (5) ausgestanzt werden,

b) die einzelnen Schichten (5, 9) mit den Metallteilen (7a) entsprechend dem Aufbau des Kupplungselementes (8) zusammengelegt werden,

c) die Schichten (5, 9) zusammengepreßt und ausgehärtet werden,

d) nach dem Aushärten die Metallteile (7a) zum Entstehen der Luftschlitze (7) herausgezogen werden.

## Claims

1. An elastic shaft coupling which allows axial and angular displacement, with two flange parts (14a, 14b) lying axially opposite one another and with at least one coupling element (12, 13) which consists of fibre-reinforced plastics material and which is built up from radially arranged continuous layers (17) and layers (16) with air slots (21), which are connected together to one another by bolts (4) arranged at the periphery, characterised in that the flange parts (14a, 15a) consist of fibre-reinforced plastics material and two coupling element parts (12, 13) are present which are each composed of layer packs (12a 12b) of at least two layers (16, 17), the one layer (16) of which has a centre part (18) and three outer parts (19) separated from the centre part (18) by intermediate spaces (air slots 21) and the other layer (17) consists of a single part, in that the fibre orientation in each layer (16, 17) extends in two directions perpendicular to one another, in which respect the fibre directions in the layers lying axially side-by-side are in each case rotated through 45°, and in that the flange parts (14a, 15a) are pressed together with the layer packs (12, 13a) and hardened.

2. An elastic shaft coupling according to claim 1, characterised in that the shafts (14, 15) that are to be connected consist of fibre-reinforced plastics material and are produced together with the flange parts (14a, 15a) in the winding process.

3. An elastic shaft coupling which allows axial and angular displacement, with two flange parts (1, 2) lying axially opposite one another and with at least one coupling element (8) which consists of fibrereinforced plastics material and which is built up from radially arranged continuous layers (9) and layers (5) with air slots (7), which are connected together to one another by bolts (4) arranged at the periphery, characterised in that two rigid flange parts (1, 2) are connected to an elastic coupling element (8) which forms a hexagonal polygonal ring, in that the coupling element (8) is built up from several inner layers (5) of trapezoidal parts (6) offset through 120° with air slots (7) lying therebetween and from two outer layers (9) which form a complete hexagonal polygonal ring, in which respect the trapezoidal parts (6) in the layers (5) respectively lying axially side-by-side are offset through 60° to one another, the fibre orientation in each layer (5, 9) extends in two directions perpendicular to one another and the fibre directions in the layers (5, 9) lying axially side-by-side are rotated through 45°, and in that the layers (5, 9) belonging to the coupling element (8) are compressed and hardened.

4. A method of producing the elastic shaft coupling according to claims 1 and 2, characterised in that

a) the parts (17, 18, 19) forming the layers (16, 17) and layer packs (12a, 12b) are punched out from pre-impregnated plies of fibre-reinforced plastics material (prepreg parts) and metal parts (20) are punched out in accordance with the intermediate spaces (air slots 21) between the parts (18, 19) of the layer (16),

b) the individual layers (16, 17) are placed together with the metal parts (20) and the flange parts (14a, 14b) are placed together with the shafts (14, 15) in accordance with the structure of the coupling parts (11a, 11b),

c) the layers (16, 17) and flange parts (14a, 14b) are compressed and hardened,

d) after the hardening the metal parts (20) are extracted to give rise to the air slots (21).

5. A method of producing the coupling element (8) of the elastic shaft coupling according to claim 3, characterised in that

a) the parts (6, 9) forming the layers (5, 9) are punched out from pre-impregnated plies of fibre-reinforced plastics material (prepreg parts) and metal parts (7a) are punched out in accordance with the air slots (7) between the parts (6) of the layer (5),

b) the individual layers (5, 9) are placed together with the metal parts (7a) in accordance with the structure of the coupling element (8),

c) the layers (5, 9) are compressed and hardened,

d) after the hardening the metal parts (7a) are extracted to give rise to the air slots (7).


**Revendications**

1. Accouplement d'arbres élastique autorisant un déplacement axial angulaire comprenant deux éléments de bride, axialement opposés l'un par rapport à l'autre et au moins un élément d'accouplement (12, 13), réalisé en matière synthétique renforcée de fibres et constitué de couches (17) continues disposées radialement et de couches (16) comportant des fentes d'aération (21), qui sont mutuellement raccordés par des vis (4) réparties sur la périphérie, caractérisé par le fait que les éléments de bride sont réalisés en matière synthétique renforcée de fibres et qu'il est prévu deux éléments d'accouplement (12, 13) qui se composent chacun de paquets de couches (12a, 12b) d'au moins deux couches (16, 17), la couche (16) comportant un élément médian (18) et trois éléments extérieurs (19) séparés de l'élément médian (18) par des espaces intermédiaires fentes d'aération (21) et l'autre couche (17) n'étant constituée que d'un seul élément, que l'orientation des fibres dans chaque couche (16, 17) est disposée dans deux directions perpendiculaires l'une par rapport à l'autre, les directions des fibres dans les couches situées axialement les unes à côté des autres étant respectivement tournées de 45°, et que les éléments de bride avec les paquets de couches (12a, 13a) sont pressés ensemble et durcis.

2. Accouplement d'arbres élastique selon la revendication 1, caractérisé par le fait que les arbres (14, 15) à raccorder sont réalisés en matière synthétique renforcée de fibres et sont fabriqués en même temps que les éléments de bride par un procédé d'enroulement.

3. Accouplement d'arbres élastique autorisant un déplacement axial et angulaire, comprenant deux éléments de bride (1, 2), axialement opposés l'un par rapport à l'autre, et au moins un élément d'accouplement (8), réalisé en matière synthétique renforcée de fibres et constitué de couches (9) continues disposées radialement et de couches (5) comportant des fentes d'aération (7), qui sont mutuellement raccordés par des vis (4) réparties sur la périphérie, caractérisé par le fait que deux éléments de bride rigides (1, 2) sont raccordés par un élément d'accouplement élastique (8) formant un anneau polygonal hexagonal, que l'élément d'accouplement (8) est constitué par plusieurs couches internes (5) composées d'éléments trapézoïdaux (6) décalés de 120° avec fentes d'aération intermédiaires (7) et par deux couches externes (9) formant un anneau polygonal hexagonal complet, les éléments trapézoïdaux (6) dans les couches (5) respectivement juxtaposées dans le sens axial étant décalés de 60°C les uns par rapport aux autres, l'orientation des fibres dans chaque couche (5, 9) étant prévue dans deux directions perpendiculaires l'une par rapport à l'autre, et les directions des fibres dans les couches (5, 9) juxtaposées dans le sens axial étant tournées de 45° et que les couches (5, 9) appartenant à l'accouplement (8) sont pressées les unes contre les autres et durcies.

4. Procédé de fabrication de l'accouplement élastique selon les revendications 1 et 2, caractérisé par le fait que,

a) on découpe les éléments (17, 18, 19) formant les couches (16, 17) et les paquets de couches (12a, 12b) dans des feuilles préimmprégnées en matière synthétique renforcée de fibres (éléments en prepreg) et on découpe les pièces métalliques (20) conformément aux espaces intermédiaires (fentes d'aération 21) comprises entre les éléments (18, 19) de la couche (16),

b) on assemble les différentes couches (16, 17) avec les éléments métalliques (20) et les éléments de bride avec les arbres (14, 15), conformément à la structure des éléments d'accouplement (11a, 11b),

c) on presse les uns contre les autres et on durcit les couches (16, 17) et les éléments de brides,

d) après durcissement, on enlève les éléments métalliques (20) pour la formation des fentes d'aération (21).

5. Procédé de fabrication de l'élément (8) de l'accouplement d'arbres élastique selon la revendication 3, caractérisé par le fait que,

a) on découpe les éléments (6, 9) formant les couches (5, 9) dans des feuilles préimprégnées en matière synthétique renforcée de fibres (éléments en prepreg) et les éléments métalliques (7a) conformément aux fentes d'aération (7) comprises entre les éléments (6) de la couche (5),

b) on assemble les différentes couches (5, 9) avec les éléments métalliques (7a) conformément à la structure de l'élément d'accouplement (8),

c) on presse les unes contre les autres les couches (5, 9) et on les durcit,

d) après le durcissement, on enlève les éléments métalliques (7a) pour la formation des fentes d'aération (7).

FIG. 1

FIG. 2

FIG. 3

FIG.4

FIG. 5

FIG.6

FIG. 7

FIG. 8

FIG. 9

FIG. 10

FIG. 11